# EUROPÄISCHE PATENTSCHRIFT

(11) **EP 0 878 247 B1**
(45) Veröffentlichungstag und Bekanntmachung des Hinweises auf die Patenterteilung: **12.03.2003**
(21) Anmeldenummer: 98108607.7
(22) Anmeldetag: 12.05.1998
(51) Int. Cl.: B21B 38/00, G01N 27/90

(54) **Prüfanordnung zur zerstörungsfreien Prüfung von warmgewalztem Stabstahl**
Testing device for non-destructive testing of hot rolled steel bars
Dispositif de test pour l'essai non destructif d'acier en barres laminé a chaud

(30) Priorität: 13.05.1997 DE 19719980
(43) Veröffentlichungstag der Anmeldung: 18.11.1998
(73) Patentinhaber: Georgsmarienhütte GmbH, 49124 Georgsmarienhütte (DE)
(72) Erfinder: Scharlemann, Horst, 49170 Hagen (DE)
(74) Vertreter: Röther, Peter, Dipl.-Phys.

(56) Entgegenhaltungen:
- EP-A- 0 468 905
- FR-A- 2 720 303
- US-A- 4 461 995
- PATENT ABSTRACTS OF JAPAN vol. 010, no. 271 (P-497), 16. September 1986 & JP 61 093904 A (SUMITOMO METAL IND LTD), 12. Mai 1986

## Beschreibung

Die Erfindung betrifft eine Prüfanordnung zur zerstörungsfreien Prüfung von heißem Stabstahl, gemäß dem Oberbegriff des Anspruchs 1.

Bekannte Prüfanordnungen benutzen diverse Verfahren, beispielsweise das Röntgen- oder das Ultraschallverfahren zur Prüfung gewalzter Stahlprodukte.

Die Erfindung bezieht sich jedoch speziell auf eine Prüfanordnung, bei der eine sogenannte Durchlaufspule eingesetzt wird, mit deren Hilfe der Stab bereits während des Walzvorgangs geprüft werden kann. Die Durchlaufspule umgibt den zu walzenden Stab ringförmig. Die Arbeits- und Wirkungsweise derartiger Durchlaufspulen wird als bekannt vorausgesetzt. Es sei jedoch bemerkt, daß zwischen Differenz-Durchlaufspulen und Absolut-Durchlaufspulen unterschieden wird.

Eine Differenz-Durchlaufspule erfaßt Lochfehler, Querfehler sowie Längsfehler mit hoher Anzeigeempfindlichkeit, während eine Absolut-Durchlaufspule gravierende Längsfehler in ihrer vollen Länge tiefenproportional anzeigt.

Eine Differenz-Durchlaufspule ist beispielsweise aus der EP-A-0468905 bekannt.

Mit dieser Anordnung werden Rohre beim Walzen auf Fehler überprüft. Die beiden Spulen sind so angeordnet, daß eine vor und eine hinter der Walze montiert ist, wodurch der Montageaufwand erhöht und die Zugänglichkeit zur Anordnung vermindert wird.

Der Einsatz einer Absolut-Durchlaufspule ist beispielsweise aus der US-A-4 461 995 bekannt. Mit Hilfe dieser Prüfanordnung werden ebenfalls Rohre überprüft, wobei die Geradführung des Rohres durch separate Führungsrollen erhalten werden soll. Somit ist der konstruktive Aufwand eher noch größer, als in der zuvor genannten bekannten Anordnung.

Damit eine ausreichende Empfindlichkeit der Fehlererkennung gewährleistet ist, darf der Querschnitt der Spule nicht zu groß sein, da die Empfindlichkeit derselben proportional zum Quadrat des Abstandes zum Prüfkörper abnimmt.

Wird jedoch ein kleinerer Spulendurchmesser gewählt, ergibt sich das Problem, daß durch Radialbewegungen des durch die Spule laufenden Stabes ein Rauschniveau entsteht, welches eindeutige Aussagen darüber, ob ein angezeigtes Signal einem Fehler im Stab zugeordnet werden kann oder ob es auf die Eigenbewegung des Stabes zurückzuführen ist, nicht gestattet.

Der Erfindung liegt daher die Aufgabe zugrunde, eine Prüfanordnung der eingangs genannten Art anzugeben, die so angeordnet ist, daß das Rauschniveau der Durchlaufspule und der Abstand vom Prüfmaterial und Spule minimiert werden kann.

Die Erfindung löst diese Aufgabe mit einer Prüfanordnung mit zwei in einem Block zusammengefaßten, hintereinander angeordneten Walzgerüsten, bei der der zu walzende Stahl durch eine Durchlaufspule geführt wird und eventuell im Stahl vorhandene Fehler wie Risse, Löcher etc. zu Ausbreitungsstörungen der im Prüfmaterial erregten Wirbelströme führen, die in der Spule ein Prüfsignal erzeugen, das aufgezeichnet und ausgewertet wird, bei der die Durchlaufspule zwischen den zwei von mehreren in einem Block zusammengefaßten, hintereinander angeordneten Walzgerüsten an einer dem Walzgerüst zugeordneten, unmittelbar hinter dem Walzgutaustritt dieses Walzgerüstes montierten Walzenkühlvorrichtung angeordnet ist.

Oberhalb des Curie-Punktes ist µᵣₑₗ = 1, der Stahl also unmagnetisch. Es treten somit keine Schwankungen in µ auf, so daß hierdurch das Meßergebnis nicht verfälscht werden kann.

Dadurch, daß ein Prüfort gewählt wird, an dem sichergestellt ist, daß radiale Eigenbewegungen des Stabes in der Spule so gut wie ausgeschlossen sind, also eine exzellente Geradführung zumindest in einem hinreichend langen Bereich erzeugt wird, kann zum einen die Spule im Querschnitt des zu prüfenden Stabes besser angepaßt werden, was die Empfindlichkeit der Messung steigert, und zum anderen wird das Rauschniveau entscheidend gesenkt.

Als Prüfort wird ein Ort gewählt, der zwischen zwei von mehreren in einem Block zusammengefaßten Walzgerüsten liegt. Gerade hier ist ein Bereich gegeben, in dem der zu walzende Stab auf dem relativ kurzen Stück zwischen den Walzspalten der hintereinander angeordneten Walzsysteme sehr gerade geführt ist und somit der Abstand von durchlaufendem Stab und Spule praktisch konstant bleibt.

Die Walzstraße besteht aus mehreren derartiger Blöcke oder Staffeln, in denen der Stab ausgehend von einem als Knüppel ausgebildeten, glühenden Walzgut sukzessive auf den gewünschten Querschnitt mit der gewünschten Profilierung heruntergewalzt wird, wonach er anschließend auf Länge geschnitten und auf einem Kühlbett abgelegt wird, woraufhin er abschließend gerichtet wird.

Um sicherzustellen, daß möglichst alle beim Walzen aufgetretenen Fehler erfaßt werden, erfolgt die Prüfung vorzugsweise in einer Staffel, die am Ende der Walzstraße liegt.

Beim Walzen von Stabstahl werden bevorzugt Mehrwalzen-Walzgerüste eingesetzt, von denen drei bis fünf in einem Block (sogenannter Kocksblock) hintereinander angeordnet sind. Gemäß der Erfindung ist die Durchlaufspule an einer dem Walzgerüst zugeordneten Walzenkühlvorrichtung montiert, die beispielsweise bei Dreiwalzen-Walzgerüsten als sternförmig ausgebildetes, das Kühlwasser auf die Walzen spritzendes Rohrsystem (auch Hirschgeweih genannt) verwirklicht ist. Die drei Rohre vereinigten sich in einem flanschartig ausgebildeten Ring, aus dem das Kühlwasser auf die einzelnen Rohre verteilt wird. Dieser Ring eignet sich in vorzüglicher Weise zur (auch nachträglichen) Befestigung der Durchlaufspule, zumal er direkt hinter dem Walzgutaustritt des entsprechenden Walzgerüstes angeordnet ist.

Somit ergeben sich durch die erfindungsgemäße Anordnung des Prüfsystems ausgezeichnete Prüfbedingungen bei minimalem Konstruktionsaufwand.

Gemäß Anspruch 2 besteht bei Dreiwalzen-Walzgerüsten jedes Walzgerüst aus drei im Winkel von 120 ° zueinander um den Walzspalt herum versetzt angeordneten, scheibenförmigen Walzen, wobei die drei Walzen aus Ganzes in definierten Winkeln zu den drei Walzen der folgenden Walzgerüste versetzt sind. Durch die versetzte Anordnung der Walzentripel zueinander ergibt sich ein minimaler Abstand zwischen ihnen, der sich als Prüfort in vortrefflicher Weise eignet.

## Patentansprüche

1. Prüfanordnung zur zerstörungsfreien Prüfung von heißem Stabstahl oberhalb des Curie-Punktes, mit zwei in einem Block zusammengefaßten, hintereinander angeordneten Walzgerüsten, bei der der zu walzende Stahl durch eine Durchlaufspule geführt wird und eventuell im Stahl vorhandene Fehler wie Risse, Löcher etc. zu Ausbreitungsstörungen der im Prüfmaterial erregten Wirbelströme führen, die in der Spule ein Prüfsignal erzeugen, das aufgezeichnet und ausgewertet wird,
**dadurch gekennzeichnet,**
**daß** die Durchlaufspule zwischen den zwei von mehreren in einem Block zusammengefaßten, hintereinander angeordneten Walzgerüsten an einer dem Walzgerüst zugeordneten, unmittelbar hinter dem Walzgutaustritt dieses Walzgerüstes montierten Walzenkühlvorrichtung angeordnet ist.

2. Prüfanordnung nach Anspruch 1,
**dadurch gekennzeichnet,**
**daß** der Block aus mehreren hintereinander angeordneten Dreiwalzen-Walzgerüsten besteht, bei denen die Walzen jeweils im Winkel von 120 ° zueinander sternförmig um den Walzspalt herum angeordnet sind.

## Claims

1. A testing system for the disturbance-free testing of hot steel bar above the Curie point, with two roll stands combined in a block and arranged one behind the other, in which the steel to be rolled is guided through a through-coil and any faults present in the steel, such as cracks, holes etc., lead to disturbances of propagation of the eddy currents excited in the test material, generating a test signal in the coil which is recorded and evaluated,
**characterised in that**
the through-coil is positioned between the two roll stands of a plurality of combined in a block and arranged one behind the other, on a roller-cooling device which is associated with the roll stand and mounted immediately behind the rolling-stock outlet of this roll stand.

2. A testing system according to Claim 1,
**characterised in that**
the block is composed of a plurality of triple-roller roll stands arranged one behind another, in which the rollers are arranged in a star shape around the roll gap, in each case at an angle of 120° relative to one another.

## Revendications

1. Dispositif d'essai pour l'essai non destructif d'acier en barre chaud au-dessus du point de Curie, comportant deux cages de laminoir disposées l'une derrière l'autre, réunies en un bloc, dans lequel l'acier à laminer est guidé à travers une bobine de passage et d'éventuels défauts tels que fissures, trous, etc., présents dans l'acier, conduisent à des perturbations de la propagation des courants de Foucault générés dans le matériau à l'essai qui produisent, dans la bobine, un signal d'essai qui est enregistré et interprété, **caractérisé en ce que** la bobine de passage est disposée entre deux parmi plusieurs cages de laminoir disposées les unes derrière les autres et réunies en un bloc, sur un dispositif de refroidissement des cylindres associé à la cage de laminage et monté directement derrière la sortie du produit laminé de cette cage de laminoir.

2. Dispositif d'essai selon la revendication 1, **caractérisé en ce que** le bloc est constitué de plusieurs cages de laminoir à trois cylindres disposées les unes derrière les autres, dans lesquelles les cylindres sont disposés en étoile, suivant un angle de 120° les uns par rapport aux autres, autour de la fente de laminage.
